# EUROPÄISCHE PATENTANMELDUNG

(11) **EP 3 050 779 A1**
(43) Veröffentlichungstag der Anmeldung: **03.08.2016**
(21) Anmeldenummer: 16150411.3
(22) Anmeldetag: 07.01.2016
(51) Int. Cl.: B62D 7/06, B62D 5/04, B60G 3/14, B60G 7/00

(54) **SCHRÄGLENKERACHSE ZUR AUFHÄNGUNG EINES KRAFTFAHRZEUGRADES**

(30) Priorität: 27.01.2015 DE 102015201338
(71) Anmelder: Volkswagen Aktiengesellschaft, 38440 Wolfsburg (DE)
(72) Erfinder: Pumplun, Karsten, 38442 Wolfsburg (DE)

(57) **Zusammenfassung**

Die Erfindung betrifft eine Schräglenkerachse (1) zur Aufhängung eines Rades an einer Karosserie oder einem Hilfsrahmen eines Kraftfahrzeugs, mit einem Schräglenker (10), der mit einem Radträger (20) gelenkig verbindbar ist, und einer, insbesondere aktiven, Spurstange (30) zum Verschwenken des Radträgers (20), wobei die Spurstange (30) am Schräglenker (10) abgestützt ist.

## Beschreibung

Die Erfindung betrifft eine Schräglenkerachse zur Aufhängung eines Rades an einer Karosserie oder einem Hilfsrahmen eines Kraftfahrzeugs.

Es sind Schräglenkerachsen bekannt, die dazu dienen, die Fahrzeugräder einzeln an der Karosserie oder am Hilfsrahmen eines Kraftfahrzeugs aufzuhängen. Die Schräglenkerachsen werden meistens zur Radaufhängung an der Hinterachse verwendet. Bekannte Schräglenkerachsen werden in Form einer dreiecksförmigen Schwinge ausgebildet, die an einem hinten liegenden Ende mit einem Achsschenkel bzw. einem Radträger verbunden und an zwei innen liegenden Enden an der Karosserie oder am Hilfsrahmen des Kraftfahrzeuges abgestützt ist. Die Schräglenkerachsen verbinden die Eigenschaften von Längs- und Querlenker, wobei sie beim Einfedern der Räder bessere Fahrstabilität bieten als die Querlenker. Dabei wird eines der innen liegenden Enden der Schwinge, das näher zur Fahrzeugmitte angebracht ist, etwas weiter hinten angeordnet als das äußere Ende.

Um eine bessere Fahrdynamik und Lenkung der Räder durch die Schräglenkerachsen zu erzielen, werden die Lagerstellen zur Karosserie und zu den Rädern üblicherweise vergleichsweise hart ausgeführt. Dadurch erleidet der Fahrkomfort jedoch Nachteile, da die Längsfederung (Reifen-Abrollhärte) ebenfalls zu hart wird. Außerdem ist es nachteilig, dass bei einer solchen Radaufhängung negative akustische Störeffekte bei der Radeinfederung entstehen.

Deswegen ist es die Aufgabe der vorliegenden Erfindung, mindestens einen aus dem Stand der Technik bekannten Nachteil zumindest zum Teil zu überwinden. Insbesondere ist es die Aufgabe der vorliegenden Erfindung, eine Schräglenkerachse zur Aufhängung eines Rades an einer Karosserie oder einem Hilfsrahmen eines Kraftfahrzeugs bereitzustellen, welche einen verbesserten Fahrkomfort gewährleistet, negative akustische Geräuschausbreitung zum Fahrgastinnenraum vermindert und gleichzeitig eine optimale Fahrdynamik ermöglicht.

Die voranstehende Aufgabe wird durch eine Schräglenkerachse mit den Merkmalen des Anspruchs 1 gelöst. Weitere Vorteile, Merkmale und Details der Erfindung ergeben sich aus den Unteransprüchen, der Beschreibung und den Zeichnungen.

Die Erfindung stellt hierbei eine Schräglenkerachse zur Aufhängung eines Rades an einer Karosserie oder einem Hilfsrahmen eines Kraftfahrzeugs bereit, die mit einem Schräglenker, der mit einem Radträger gelenkig verbindbar ist, und einer, insbesondere aktiven, Spurstange zum Verschwenken des Radträgers ausgebildet ist, wobei die Spurstange am Schräglenker abgestützt ist. Der Erfindungsgedanke liegt dabei darin, die Funktion der Aufhängung und die Funktion der Anlenkung des Radträgers zu entkoppeln. Dies wird erfindungsgemäß durch die extra am Schräglenker vorgesehene Spurstange gewährleistet.

Dabei kann der Schräglenker, insbesondere ausschließlich, zum Aufhängen des Radträgers bzw. des Rades dienen, wobei die Verbindung des Schräglenkers zur Karosserie bzw. zum Hilfsrahmen des Kraftfahrzeuges "weicher" ausgeführt werden kann als die Verbindung herkömmlicher Schräglenker, die beide Funktionen der Aufhängung und der Anlenkung der Räder gleichzeitig erfüllen müssen. Dadurch entstehen erhebliche Vorteile gegenüber den bekannten Schräglenkern. Insbesondere ermöglicht die Erfindung, Komfort und Fahrdynamikansprüche unabhängig voneinander zu optimieren. Eine weichere Schräglenkerlagerung ist komforttechnisch vorteilhaft, wobei gleichzeitig die Fahrdynamik ohne aktiven Lenkeingriff durch den Schräglenker nicht leiden muss. Weiterhin ist es besonders vorteilhaft, dass durch eine weiche Radträgeraufhängung eine zweite akustische Enkopplungsebene zum Fahrgastinnenraum geschaffen werden kann, um die Ausbreitung von störenden Geräuschen bei Radeinfederung zum Fahrgastinnenraum zu vermeiden.

Die extra ausgebildete aktive Spurstange übernimmt erfindungsgemäß die Anlenkung des Radträgers bzw. des Rades. Die Anlenkung des Radträgers bzw. des Rades durch die Spurstange kann dabei vorteilhafterweise völlig unabhängig von der Hubkinematik des Radträgers erfolgen. Über die Spurstange entsteht erfindungsgemäß ein zusätzlicher Freiheitsgrad, welcher vorteilhafterweise zum verbesserten Anlenken des Radträgers verwendet werden kann. Die Spurstange kann dabei über ein zusätzliches Lenklager (zusätzliche Anlenkstelle) mit dem Radträger in Wirkverbindung stehen, wobei dieses zusätzliche Lenklager die Schwenkbewegung des Radträgers bezüglich der Lagerstelle zwischen dem Schräglenker und dem Radträger ermöglichen kann. Da die herkömmlichen Schräglenker grundsätzlich zum Übersteuern neigen, reichen bei der erfindungsgemäßen Spurstange, die eine gesonderte Anlenkstelle bereitstellt, bereits Anlenkwinkel des Rades von 0,5°, um die Kurvenfahrten optimal auszuführen. Außerdem ermöglicht die Spurstange ein leichteres Rangieren des Kraftfahrzeuges, wobei bei einem Anlenkwinkel von nur 5° der Wendekreis des Kraftfahrzeuges um 1 m reduziert werden kann. Weiterhin ist es besonders vorteilhaft, dass durch Verwenden von jeweils einer Spurstange für jedes Rad genug Bauraum unterhalb der Karosserie des Kraftfahrzeuges verbleibt, der normalerweise, insbesondere bei tiefergelegten Fahrzeugen, sehr begrenzt ist, um einen Antrieb, insbesondere einen Allradantrieb zu integrieren. Dabei ist es von Vorteil, dass die erfindungsgemäße Schräglenkerachse mit unterschiedlichen Antrieben in verschiedenen Fahrzeugmodellen eingesetzt werden kann, was unabhängig von der Fahrzeuggeometrie und vom verfügbaren Bauraum unterhalb bestimmter Fahrzeuge geschehen kann.

Erfindungsgemäß kann der Schräglenker in Form einer dreiecksförmigen Schwinge ausgebildet sein. Dabei ist es vorteilhaft, dass jedes Rad des Kraftfahrzeuges durch jeweils einen Schräglenker in Form einer Schwinge einzeln eingefedert werden kann. Nach einem weiteren Vorteil kann die Schwinge derart seitlich an der Karosserie bzw. am Hilfsrahmen des Kraftfahrzeuges angeordnet werden, dass beim Einfedern das Rad nach oben und etwas nach außen bezüglich seiner ursprünglichen Position verschwenken kann. Dadurch kann bei hohen Geschwindigkeiten, bei großen Beladungen des Kraftfahrzeuges sowie bei Kurvenfahrten der Abstand zwischen den Hinterrädern im Vergleich zum Abstand zwischen den Vorderrädern vergrößert werden, wodurch das Kraftfahrzeug etwas an Spurbreite gewinnen kann, um die Fahrstabilität zu erhöhen. Ebenfalls kann durch eine derartige Aufhängung der Räder mittels einer Schwinge erreicht werden, dass bei hohen Geschwindigkeiten, großen Beladungen und Kurvenfahrten die Hinterräder mit den oberen Rändern etwas nach innen kippen können, so dass das Kraftfahrzeug einen negativen Sturz gewinnen kann, um die Fahrstabilität noch weiter zu erhöhen. Daneben kann die Spurstange aktiv zum Lenken der Räder beitragen, um den Radsturz entsprechend der Situation zu beeinflussen. Die Kombination des erfindungsgemäßen Schräglenkers in Form einer Schwinge und der erfindungsgemäßen aktiven Spurstange kann somit das Fahrverhalten sowie die Fahrdynamik des Kraftfahrzeuges im Vergleich zu herkömmlichen Schräglenkerachsen erheblich verbessern.

Ferner kann es vorteilhaft sein, dass der Schräglenker an zwei innen liegenden Enden jeweils ein Gummilager aufweisen kann, um den Schräglenker mit der Karosserie oder dem Hilfsrahmen, also dem Fahrwerk des Kraftfahrzeuges, insbesondere schwenkbar, zu verbinden. Dabei kann es vorteilhaft sein, wenn eines der Gummilager, welches der Fahrzeugmitte zugewandt ist, etwas weiter oberhalb des anderen Gummilagers abgestützt wird, um beim Einfedern der Räder für eine Vorspur zu sorgen. Die beiden Gummilager können gemäß der Erfindung weicher, d. h. nachgiebiger, ausgeführt sein als die Lager herkömmlicher Schräglenker. Dadurch entsteht der Vorteil, dass die Räder durch die erfindungsgemäßen Gummilager weicher eingefedert werden können als durch die herkömmlichen Gummilager. Dabei können bei Straßenunebenheiten und/oder bei Kurvenfahrten ruckartige Stöße von den Rädern auf die Karosserie durch die Gummilager abgefangen bzw. gemindert werden. Der Fahrkomfort kann mithin deutlich verbessert werden.

Weiterhin kann erfindungsgemäß vorgesehen sein, dass der Schräglenker an einem außen liegenden Ende zwei, insbesondere vertikal versetzte, Lagerstellen aufweisen kann, um den Radträger, insbesondere gelenkig, aufzuhängen. Ebenfalls kann es gemäß der Erfindung vorgesehen sein, dass die Lagerstellen eine Schwenkachse des Radträgers bestimmen können. Zwei vertikale Lagerstellen können vorteilhafterweise ein stabiles Fahrverhalten und eine komfortable Abfederung des Rades bei Fahrbahnunebenheiten gewährleisten. Zwei vertikale Lagerstellen bestimmen nicht nur die Schwenkachse des Radträgers, sondern ermöglichen gleichzeitig, das Rad exakter zu führen. Außerdem können zwei Lagerstellen besser die Schwingungen der Räder abfedern und dafür sorgen, dass weniger Geräusche bei der Radeinfederung entstehen. Weiterhin sind die zwei erfindungsgemäßen Lagerstellen für das Rad stabiler als beispielsweise nur eine Lagerstelle. Sie ermöglichen zudem eine längere Lebensdauer der Radträger bzw. der Achsschenkel.

Vorteilhafterweise können die zwei erfindungsgemäßen Lagerstellen als Gummilager oder Wälzlager ausgebildet sein. Dabei können die obere Lagerstelle als ein Führungsgelenk und die untere Lagerstelle als ein Traggelenk ausgebildet sein. Die derart ausgebildeten Lagerstellen ermöglichen vorteilhafterweise die Lenkbewegungen der Räder besser umzusetzen. Gleichzeitig sind solche Lagerstellen einfach ausgeführt, stabil und wartungsarm.

Des Weiteren kann vorteilhafterweise vorgesehen sein, dass die Spurstange an einem äußeren Ende ein Lenklager aufweisen kann, um die Spurstange mit dem Radträger, insbesondere gelenkig, zu verbinden. Das Lenklager kann dabei als ein Führungsgelenk, insbesondere als ein Gummilager oder ein Wälzlager, ausgebildet sein. Dadurch kann erreicht werden, dass die Lenkwirkung der Spurstange nicht nur stabil, sondern auch weich auf die Räder übertragen werden kann, ohne dass das Rad bei Anlenkung ruckartig bewegt werden muss.

Das Lenklager kann dabei eine Anlenkstelle für den Radträger bilden, um den Radträger, insbesondere um die Schwenkachse, zu verschwenken. Somit kann vorteilhafterweise erreicht werden, dass in der Ebene des Rades drei Punkte gebildet werden können, die eine verbesserte, stabile Ausrichtung bzw. Aufhängung des Rades bestimmen. Zwei der drei Punkte sind dabei die zwei vertikal versetzten Lagerstellen am Schräglenker, die die Schwenkachse des Rades bestimmen. Das Lenklager an der Spurstange bildet wiederum den dritten Punkt, wobei die Hebelwirkung der Spurstange beim Heraus- oder Hineinfahren der Spurstange an diesem dritten Punkt auf dem Rad einsetzt, um das Rad anzulenken bzw. bezüglich der Schwenkachse zu verschwenken. Durch eine entsprechende Anordnung der drei Punkte (der Lagerstellen und des Lenklagers) kann eine optimale Ansteuerung des Rades erreicht werden. Insbesondere kann durch die Wahl des Abstandes zwischen der Schwenkachse und des Lenklagers die Lenkwirkung je nach Bedarf in einem bestimmten Fahrzeugmodell angepasst werden. Mit einem längeren Abstand, d. h. mit einem größeren Hebel, kann die Lenkung der schweren bzw. tiefergelegten Kraftfahrzeuge erleichtert werden. Umgekehrt kann mit einem kleineren Abstand, d. h. mit einem kleineren Hebel, die Lenkung leichterer Kraftfahrzeuge stabiler ausgeführt werden.

Erfindungsgemäß kann vorgesehen sein, dass die Spurstange an einem inneren Ende ein Befestigungslager aufweisen kann, um die Spurstange mit dem Schräglenker, insbesondere gelenkig, zu verbinden. Hierbei kann das Befestigungslager als ein Führungsgelenk, insbesondere als ein Gummilager oder ein Wälzlager, ausgebildet sein. Mithin kann vorteilhafterweise erreicht werden, dass jeweils eine Spurstange für jedes anzusteuernde Rad am entsprechenden Schräglenker abgestützt werden kann. Das Befestigungslager in Form eines Gummilagers oder eines Wälzlagers kann vorteilhafterweise für eine stabile und dennoch flexible Wirkungsübertragung zwischen der Spurstange und dem Rad sorgen.

Weiterhin kann erfindungsgemäß vorgesehen sein, dass die Spurstange derart zwischen dem Schräglenker und dem Radträger angeordnet sein kann, um den Radträger mit einem Lenkwinkel bis ca. 5°, insbesondere um die Schwenkachse, zu verschwenken. Dabei kann die Erstreckungsrichtung der Spurstange zum Rad vorteilhafterweise einen zusätzlichen Freiheitsgrad für die Ansteuerung des Rades definieren, um die Ansteuerung des Rades unabhängig von der Radaufhängung zu gewährleisten. Die Spurstange dient hierbei erfindungsgemäß dazu, um das Rad aktiv anzusteuern. Durch eine entsprechende Ausrichtung der Spurstange kann schon ein geringer Ansteuerungswinkel zum Ausführen einer Kurvenfahrt genügen. Dabei kann die Ansteuerung des Rades mit wenig Aufwand effektiv ausgeführt werden.

Vorteilhafterweise kann die Spurstange einen Antrieb aufweisen, um eine Lenkbewegung des Rades zu ermöglichen. Erfindungsgemäß kann der Antrieb eine translatorische Bewegung der Spurstange, insbesondere mit einem Hub von bis ca. 10 mm, ermöglichen. Der Antrieb kann dabei einen Motor aufweisen, welcher über ein Getriebe die Antriebswirkung auf die Spurstange übertragen kann. Ebenfalls ist es denkbar, dass der Antrieb einen hydraulischen oder pneumatischen Arbeitszylinder aufweisen kann, in welchem die Spurstange als eine Kolbenstange angebracht werden kann, um die Spurstange translatorisch zu bewegen. Durch die erfindungsgemäße Anordnung der Spurstange und des Schräglenkers ist es ausreichend, dass durch minimale Hübe die Spurstange das Rad ausreichend anlenken kann. Folglich kann die erfindungsgemäße Schräglenkerachse mit einfachen Maßnahmen eine verbesserte, stabile Anlenkung der Räder erreichen, wobei die Räder gleichzeitig optimal eingefedert werden können, ohne Komforteinbußen zu erleiden, negative akustische Effekte zu verursachen oder dergleichen.

Weitere, die Erfindung verbessernde Maßnahmen werden nachstehend mit der Beschreibung des bevorzugten Ausführungsbeispiels der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die Figuren nur beschreibenden Charakter haben und nicht dazu gedacht sind, die Erfindung in irgendeiner Form einzuschränken.

Es zeigen:
- Fig. 1: eine schematische Darstellung einer erfindungsgemäßen Schräglenkerachse,
- Fig. 2: eine perspektivische Darstellung der erfindungsgemäßen Schräglenkerachse und einem darauf aufgehängten Kraftfahrzeugrad,
- Fig. 3a: eine schematische Darstellung der erfindungsgemäßen Schräglenkerachse mit einem darauf aufgehängten Kraftfahrzeugrad in einer Stellung "Mitlenken", und
- Fig. 3b: eine schematische Darstellung der erfindungsgemäßen Schräglenkerachse mit einem darauf aufgehängten Kraftfahrzeugrad in einer Stellung "Gegenlenken".

In den unterschiedlichen Figuren sind gleiche Teile stets mit denselben Bezugszeichen versehen, weshalb diese in der Regel nur einmal beschrieben werden.

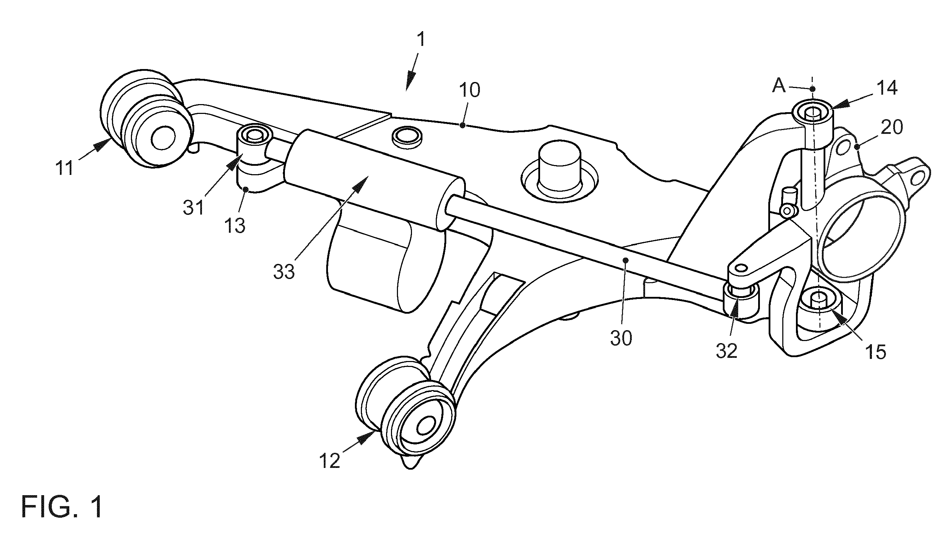

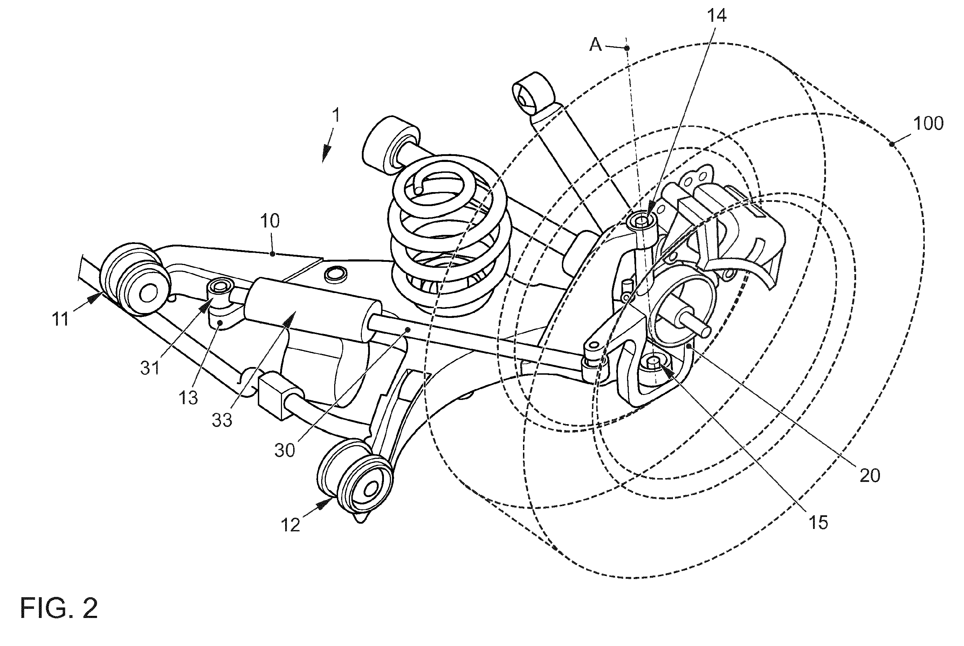

In den Figuren 1 und 2 ist eine schematische Darstellung einer erfindungsgemäßen Schräglenkerachse 1 gezeigt. Die Schräglenkerachse 1 weist dabei einen Schräglenker 10 zur Aufhängung eines Rades 100 an einer Karosserie oder einem Hilfsrahmen, d. h. an einem Fahrwerk eines Kraftfahrzeugs. Der Schräglenker 10 kann dabei über zwei Gummilager 11, 12 mit dem Fahrwerk verbunden werden, um eine Einfederung des Rades 100 bei Straßenunebenheiten zu schaffen und die Stöße, die von der Fahrbahn auf die Räder einwirken können, von dem restlichen Kraftfahrzeug abzukoppeln. Die Gummilager 11, 12 liegen dabei innenseitig unterhalb des Fahrwerks des Kraftfahrzeuges. Der Schräglenker 10 ist erfindungsgemäß mit einem Radträger 20 bzw. einem Achsschenkel 20 gelenkig verbunden. Getrennt vom Schräglenker 10 sieht die Erfindung eine aktive Spurstange 30 vor, die zum Verschwenken des Radträgers 20 vorgesehen ist. Die Spurstange 30 ist vorteilhafterweise direkt am Schräglenker 10 abgestützt. Die Erfindung verwirklicht hiermit den Gedanken, dass die zwei Funktionen der Radaufhängung und der Radanlenkung unabhängig voneinander ausgeführt werden können, um die Komfortansprüche und die Fahrdynamikansprüche unabhängig voneinander zu optimieren. Die Radaufhängung wird dabei ausschließlich durch den Schräglenker 10 realisiert und die Radanlenkung durch die separat hierzu vorgesehene Spurstange 30.

Vorteilhafterweise kann durch die Trennung der beiden Funktionen die Verbindung des Schräglenkers 10 zum Kraftfahrzeug "weicher" ausgeführt werden als die Verbindung bekannter Schräglenker, die beide Funktionen gleichzeitig erfüllen müssen. Somit können die Gummilager 11, 12 ebenfalls weicher ausgeführt werden als die Gummilager der herkömmlichen Schräglenker, um die Räder besser abzufedern, und um den Fahrkomfort zu erhöhen. Durch weichere Gummilager 11, 12 kann neben der Verbesserung des Fahrkomforts die Ausbreitung von störenden Geräuschen bei Einfederung des Rades 100 zum Fahrzeuginnenraum reduziert werden. Die Verbesserung der Fahrdynamik kann dabei ausschließlich mit Hilfe der aktiven Spurstange 30 und völlig unabhängig vom Schräglenker 10 erfolgen. D. h., dass die Anlenkung des Rades 100 durch die Spurstange 30 völlig unabhängig von der Hubkinematik des Radträgers 20 erfolgen kann.

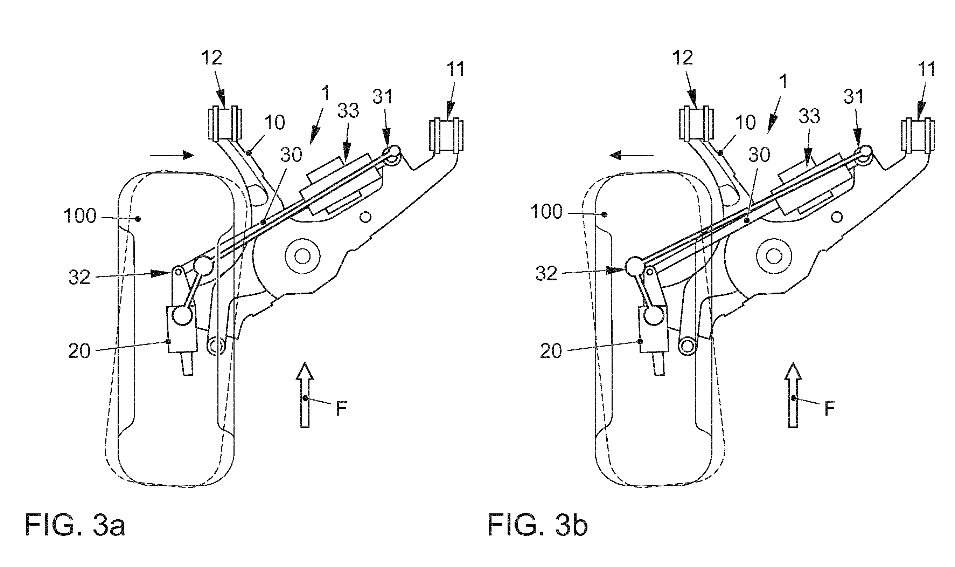

Die aktive Spurstange 30 übernimmt somit die Anlenkung des Rades 100, wie es nachfolgend anhand der Figuren 3a und 3b im Detail erklärt wird. Die Spurstange 30 bildet gemäß der Erfindung einen zusätzlichen Freiheitsgrad, um das Rad 100 effektiver anzulenken. Die Spurstange 30 ist dabei über ein Lenklager 32 mit dem Rad 100 verbunden, um an dieser Anlenkstelle das Rad 100 anzusteuern und um eine Schwenkachse A zu verschwenken. Die Anordnung der Spurstange 20, wie sie in der Figur 1 beispielhaft gezeigt ist, ermöglicht bereits bei einem Anlenkwinkel des Rades von 0,5°, eine Kurvenfahrt optimal auszuführen. Außerdem ermöglicht die erfindungsgemäße Spurstange 30 ein effizienteres Rangieren des Kraftfahrzeuges, wobei bei einem Anlenkwinkel von nur 5° der Wendekreis des Kraftfahrzeuges um 1 m im Vergleich zu herkömmlichen Schräglenkerachsen reduziert werden kann.

Erfindungsgemäß wird die Schräglenkerachse 1 zur Einzelradaufhängung benutzt, wobei für jedes Rad 100 ein eigener Schräglenker 10 und eine separate Spurstange 30 vorgesehen wird. Dadurch kann der Bauraum unterhalb der Karosserie des Kraftfahrzeuges eingespart werden, um einen entsprechenden Antrieb, insbesondere einen Allradantrieb, für das Kraftfahrzeug zu integrieren.

Wie in den Figuren 1 bis 3b zu sehen ist, weist der Schräglenker 10 die Form einer dreiecksförmigen Schwinge auf, die drei Enden 11, 12 und 14 umfasst. Die innen liegenden Enden 11, 12 dienen als Schwenklager zur Karosserie bzw. zum Hilfsrahmen des Kraftfahrzeuges. Die innen liegenden Enden 11, 12 sind derart versetzt in die Fahrzeuglangrichtung angeordnet, dass das Ende 12, welches der Fahrzeugmitte zugewandt ist, etwas nach hinten gegenüber dem äußeren Ende 11 versetzt ist. Folglich kann der Schräglenker 10 in Form der gezeigten Schwinge das Rad 100 beim Einfedern etwas nach oben und nach außen bewegen.

Die Figur 3a zeigt dabei eine Radstellung, in welcher das Rad 100 mit dem oberen Rand etwas nach innen kippt. Diese Radstellung der Figur 3a (Vorspur) ist insbesondere geeignet, um die Fahrstabilität bei hohen Geschwindigkeiten und großen Beladungen zu bewahren bzw. zu erhöhen. Die Figur 3b zeigt eine Radstellung (Nachspur), in welcher das Rad 100 mit dem vorderen Rand bezüglich der Fahrtrichtung F etwas nach außen eingestellt ist. Diese Radstellung der Figur 3b (Nachspur) ist insbesondere geeignet, um die Fahragilität bei geringen Fahrgeschwindigkeiten zu bewahren bzw. zu erhöhen. Wie in den Figuren 3a und 3b zu sehen ist, reicht bereits eine relativ kleine Bewegung der Spurstange 30 bis ca. 10 mm dafür, um den Radträger 20 mit einem Lenkwinkel bis ca. 5° um die Schwenkachse A zu verschwenken. Diese kleinen Bewegungen sind erfindungsgemäß ausreichend, um nicht nur die Kurvenfahrt zu verbessern, sondern auch ein schnelleres und wendigeres Rangieren des Kraftfahrzeuges zu schaffen.

Die Erstreckungsrichtung der Spurstange 30 zum Rad 100 definiert vorteilhafterweise einen zusätzlichen Freiheitsgrad neben der Erstreckungsrichtung des Schräglenkers 10 vom inneren Gummilager 11 zur Lagerstelle 14, um die Ansteuerung des Rades 100 unabhängig vom Schräglenker 10 zu realisieren. Um die Spurstange 30 anzusteuern, ist ein Antrieb 33 vorgesehen. Erfindungsgemäß kann der Antrieb 33 eine translatorische Bewegung der Spurstange, insbesondere mit einem Hub von bis ca. 10 mm, ermöglichen. Der Antrieb 33 kann dabei einen Motor und/oder einen hydraulischen oder pneumatischen Arbeitszylinder aufweisen, in welchem die Spurstange 30 als eine Kolbenstange angebracht werden kann.

Gemäß der Figuren 1 bis 3b weist der Schräglenker 10 an einem außen liegenden Ende 14 zwei vertikal versetzte Lagerstellen 14, 15 auf, um den Radträger 20 gelenkig aufzuhängen. Dabei bestimmen die Lagerstellen 14, 15 die Schwenkachse A des Rades 100. Zwei vertikale Lagerstellen 14, 15 sind insbesondere vorteilhaft für ein stabiles Fahrverhalten und eine komfortable Abfederung des Rades 100 bei Fahrbahnunebenheiten oder dergleichen. Diese Lagerstellen 14, 15 bestimmen hierbei nicht nur die Schwenkachse A des Rades 100, sondern sorgen gleichzeitig dafür, dass das Rad 100 stabil bezüglich der Fahrbahn, insbesondere vertikal, abgestützt werden kann. Dabei ist die obere Lagerstelle 14 als ein Führungsgelenk und die untere Lagerstelle 15 als ein Traggelenk ausgebildet.

Gemäß der Figur 1 weist die Spurstange 30 an ihrem äußeren Ende ein Lenklager 32 für das Rad 100 auf, um den Radträger 20 gelenkig mit der Spurstange 30 zu verbinden. Das Lenklager 32 kann dabei ebenfalls als ein Führungsgelenk, insbesondere als ein Gummilager oder ein Wälzlager, ausgebildet sein. Das Lenklager 32 sorgt dafür, dass die Lenkwirkung der Spurstange 30 stabil und nachgiebig auf das Rad 100 übertragen werden kann. Das Lenklager 32 bildet dabei eine Anlenkstelle für den Radträger 20, um das Rad 100 um die Schwenkachse A zu verschwenken, wie gezeigt in den Figuren 3a und 3b. Wie in der Figur 1 deutlich zu erkennen ist, sind somit in der Ebene des Rades 100 drei Punkte 14, 15, 32 gebildet, die eine stabile Ausrichtung und eine verbesserte Anlenkung des Rades 100 ermöglichen. Zwei 14, 15 der drei Punkte 14, 15, 32 sind dabei durch die zwei vertikal versetzten Lagerstellen 14, 15 am Schräglenker 10 gebildet, die gleichzeitig die Schwenkachse A des Rades 100 definieren. Das Lenklager 32 an der Spurstange 30 bildet seinerseits den dritten Punkt 32, an welchem die Hebelwirkung der Spurstange 30 auf das Rad 100 übertragen wird, um das Rad 100 um die Schwenkachse A zu verschwenken. Durch eine geeignete Anordnung der drei Punkte 14, 15, 32, d. h. der Lagerstellen 14, 15 und des Lenklagers 32, kann die Ansteuerung des Rades 100 entweder erleichtert oder erschwert werden, indem der Schwenkhebel bezüglich der Schwenkachse A entsprechend vergrößert oder verkleinert werden kann. Dies kann vorteilhaft sein, um die Lenkwirkung je nach Bedarf in einem bestimmten Fahrzeugmodell bzw. je nach Fahrzeugmaße und/oder -größe anzupassen.

Erfindungsgemäß kann vorgesehen sein, dass die Spurstange 30 an einem inneren Ende ein Befestigungslager 31 zum Schräglenker 10 an einem Punkt 13 aufweisen kann, um die Spurstange 30 mit dem Schräglenker 10 gelenkig zu verbinden. Hierbei kann das Befestigungslager 31 ebenfalls als ein Führungsgelenk, beispielsweise in Form eines Gummilagers oder eines Wälzlagers, ausgebildet sein. Das Befestigungslager 31 sorgt vorteilhafterweise dafür, dass die Spurstange 20 auf dem Schräglenker 10 stabil und dennoch flexibel abgesetzt werden kann.

Die erfindungsgemäße Schräglenkerachse 1 mit der speziell ausgebildeten Spurstange 30 und dem Schräglenker 10 stellt folglich eine verbesserte, stabilere Anlenkung des Rades 100 bereit, wobei das Rad 100 durch den Schräglenker 10 optimal eingefedert werden kann, ohne Komforteinbußen zu erleiden, und wobei das Rad 100 durch die Spurstange 30 optimal angelenkt werden kann, ohne die Hubdynamik des Rades 100 negativ zu beeinflussen.

Die voranstehende Beschreibung der Figuren 1 bis 3b beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

### Bezugszeichenliste

- 1: Schräglenkerachse

- 10: Schräglenker
- 11, 12: innen liegende Gummilager
- 14, 15: Lagerstellen

- 20: Radträger bzw. Achsschenkel

- 30: Spurstange
- 31: Befestigungslager
- 32: Lenklager
- 33: Antrieb

- A: Schwenkachse

- F: Fahrtrichtung

- 100: Rad

## Patentansprüche

1. Schräglenkerachse (1) zur Aufhängung eines Rades an einer Karosserie oder einem Hilfsrahmen eines Kraftfahrzeugs,
mit einem Schräglenker (10), der mit einem Radträger (20) gelenkig verbindbar ist, und einer, insbesondere aktiven, Spurstange (30) zum Verschwenken des Radträgers (20), wobei die Spurstange (30) am Schräglenker (10) abgestützt ist.

2. Schräglenkerachse (1) nach Anspruch 1,
**dadurch gekennzeichnet,**
**dass** der Schräglenker (10) in Form einer dreiecksförmigen Schwinge ausgebildet ist.

3. Schräglenkerachse (1) nach Anspruch 1 oder 2,
**dadurch gekennzeichnet,**
**dass** der Schräglenker (10) an zwei innen liegenden Enden jeweils ein Gummilager (11, 12) aufweist, um den Schräglenker (10) mit der Karosserie oder dem Hilfsrahmen des Kraftfahrzeuges, insbesondere schwenkbar, zu verbinden.

4. Schräglenkerachse (1) nach einem der vorhergehenden Ansprüche,
**dadurch gekennzeichnet,**
**dass** der Schräglenker (10) an einem außen liegenden Ende zwei, insbesondere vertikal versetzte, Lagerstellen (14, 15) aufweist, um den Radträger (20), insbesondere gelenkig, aufzuhängen,
und **dass** insbesondere die Lagerstellen (14, 15) eine Schwenkachse (A) des Radträgers (20) bestimmen.

5. Schräglenkerachse (1) nach Anspruch 4,
**dadurch gekennzeichnet,**
**dass** die Lagerstellen (14, 15) als Gummilager oder Wälzlager ausgebildet sind, wobei insbesondere die obere Lagerstelle (14) als ein Führungsgelenk und die untere Lagerstelle (15) als ein Traggelenk ausgebildet sind.

6. Schräglenkerachse (1) nach einem der vorhergehenden Ansprüche,
**dadurch gekennzeichnet,**
**dass** die Spurstange (30) an einem äußeren Ende ein Lenklager (32) aufweist, um die Spurstange (30) mit dem Radträger (20), insbesondere gelenkig, zu verbinden,
und **dass** insbesondere das Lenklager (32) als ein Führungsgelenk, insbesondere als ein Gummilager oder ein Wälzlager, ausgebildet ist.

7. Schräglenkerachse (1) nach einem der vorhergehenden Ansprüche,
**dadurch gekennzeichnet,**
**dass** das Lenklager (32) eine Anlenkstelle für den Radträger (20) bildet, um den Radträger (20), insbesondere um die Schwenkachse (A), zu verschwenken.

8. Schräglenkerachse (1) nach einem der vorhergehenden Ansprüche,
**dadurch gekennzeichnet,**
**dass** die Spurstange (30) an einem inneren Ende ein Befestigungslager (31) aufweist, um die Spurstange (30) mit dem Schräglenker (10), insbesondere gelenkig, zu verbinden,
und **dass** insbesondere das Befestigungslager (31) als ein Führungsgelenk, insbesondere als ein Gummilager oder ein Wälzlager, ausgebildet ist.

9. Schräglenkerachse (1) nach einem der vorhergehenden Ansprüche,
**dadurch gekennzeichnet,**
**dass** die Spurstange (30) derart zwischen dem Schräglenker (10) und dem Radträger (20) angeordnet ist, um den Radträger (20) mit einem Lenkwinkel bis ca. 5°, insbesondere um die Schwenkachse (A), zu verschwenken.

10. Schräglenkerachse (1) nach einem der vorhergehenden Ansprüche,
**dadurch gekennzeichnet,**
**dass** die Spurstange (30) einen Antrieb (33) aufweist, um eine Lenkbewegung des Rades zu ermöglichen,
und **dass** insbesondere der Antrieb (33) eine translatorische Bewegung der Spurstange (30), insbesondere mit einem Hub von bis ca. 10 mm, ermöglicht.
